# EUROPÄISCHE PATENTSCHRIFT

(11) **EP 3 811 497 B1**
(45) Veröffentlichungstag und Bekanntmachung des Hinweises auf die Patenterteilung: **26.08.2026**
(21) Anmeldenummer: 19728692.5
(22) Anmeldetag: 05.06.2019
(51) Int. Cl.: H02K 15/03, H02K 21/24, H02K 1/2798

(54) **VERFAHREN ZUR HERSTELLUNG EINES LÄUFERS FÜR EINEN ELEKTROFLACHMOTOR, LÄUFER UND ELEKTROFLACHMOTOR**
METHOD FOR PRODUCING A ROTOR FOR A FLAT ELECTRIC MOTOR, ROTOR AND FLAT ELECTRIC MOTOR
PROCÉDÉ POUR LA FABRICATION D'UN ROTOR POUR UN MOTEUR PLAT ÉLECTRIQUE, ROTOR ET MOTEUR PLAT ÉLECTRIQUE

(30) Priorität: 22.06.2018 DE 102018210164
(43) Veröffentlichungstag der Anmeldung: 28.04.2021
(73) Patentinhaber: HS Products Engineering GmbH, 82216 Maisach (DE)
(72) Erfinder: SPECHT, Martin, 82216 Maisach (DE)
(74) Vertreter: Wietzke, Andreas
(86) Internationale Anmeldenummer: PCT/EP2019/064727
(87) Internationale Veröffentlichungsnummer: WO 2019/243061

(56) Entgegenhaltungen:
- EP-A1- 1 022 201
- EP-A2- 2 243 209
- WO-A2-2014/108111
- DE-A1- 102016 207 943
- DE-A1- 2 502 871
- JP-A- 2008 199 811
- US-A- 5 041 979
- US-A1- 2013 313 935
- US-A1- 2014 225 467
- US-B2- 6 710 488
- LEE MINHYEOK ET AL: "Flux concentrating axial ferrite magnet motor", 2015 IEEE INTERNATIONAL ELECTRIC MACHINES & DRIVES CONFERENCE (IEMDC) IEEE, 10 May 2015 (2015-05-10), pages 322 - 327, XP032865840, [retrieved on 20160216], DOI: 10.1109/IEMDC.2015.7409078

## Beschreibung

Die vorliegende Erfindung betrifft ein Verfahren zur Herstellung eines Läufers für einen Elektroflachmotor. Ferner betrifft die Erfindung einen Läufer für einen Elektroflachmotor sowie einen Elektroflachmotor für einen Gurtstraffer eines Kraftfahrzeugs mit einem erfindungsgemäßen Läufer.

Aufgrund einer kontinuierlich wachsenden Verkehrsdichte und einer damit verbundenen erhöhten Unfallgefahr, ist ein wesentlicher Aspekt bei der Entwicklung von Kraftfahrzeugen die Sicherheit der Fahrzeuginsassen. Hierbei wird insbesondere zwischen unfallvermeidenden und unfallvermindernden Sicherheitssystemen unterschieden. Unfallvermeidende Sicherheitssysteme haben die Aufgabe, potenziell gefährliche Fahrsituationen zu detektieren und bei Bedarf Maßnahmen zum Abwenden eines Unfalls einzuleiten. In diesem Rahmen wird weiter zwischen aktiv eingreifenden Systemen und Warnsystemen unterschieden. Aktiv eingreifende Systeme können beispielsweise einen Einfluss auf Raddrehmomente, Lenkungswinkel oder Fahrzeugneigung nehmen. Auf diese Weise kann beispielsweise ein Blockieren der Räder verhindert, ein Bremsvorgang eingeleitet oder ein Ausweichmanöver durchgeführt werden und das unter Berücksichtigung der Fahrzeugschwerpunktslage. Hierzu werden die Stoßdämpfer z. B. mit einer Schnellverstellung versehen. Warnsysteme weisen zumeist optisch, akustisch oder haptisch auf das Vorliegen einer Gefahrensituation hin, beispielsweise durch Warnleuchten, Warntöne, Vibrieren oder dergleichen. Oftmals sind aktiv eingreifende Sicherheitssysteme mit Warnsystemen gekoppelt, sodass ein automatisches Eingreifen eines aktiv eingreifenden Sicherheitssystems mittels eines Warnsystems bestätigt wird.

Unfallvermindernde Sicherheitssysteme haben hingegen die Aufgabe, die Auswirkungen einer gefährlichen Fahrsituation oder eines Unfalls auf die Insassen des Kraftfahrzeugs, die Umwelt des Kraftfahrzeugs oder das Kraftfahrzeug selbst zu reduzieren. Zum Schutz von Insassen sind beispielsweise ein Karosseriedesign, Fahrwerkskomponenten, Airbags, Sicherheitsglas, Fahrzeugsitze oder Sicherheitsgurte als unfallvermindernde Sicherheitssysteme bekannt. Sicherheitsgurte und Fahrzeugsitze haben die Aufgabe, einen Insassen des Kraftfahrzeugs bei einer starken Verzögerung, wie z.B. einer Vollbremsung, einem Aufprall auf ein Hindernis oder dergleichen, an seiner Position zu halten, um somit Verletzungen des Insassen zu vermeiden bzw. zumindest zu reduzieren. Zur Verbesserung dieser Aufgabe weisen moderne Sicherheitssysteme sogenannte Schnellverstellvorrichtungen auf, wie z. B. Gurtstraffer, Sitzpositionsversteller, Stoßdämpferversteller, Lenkwinkelversteller, welche in einer Gefahrensituation, insbesondere bei sowie unmittelbar vor einem Aufprall oder bei einer Vollbremsung, Lose aus dem Sicherheitssystem nimmt, um somit den Insassen besser bzw. früher an der Fahrzeugverzögerung teilnehmen zu lassen. Eine kritische Fahrsituation ist z. B. mittels einer entsprechend ausgebildeten Sensorik detektierbar. Über eine Steuervorrichtung bzw. eine Auslösevorrichtung sind Sensordaten der Sensorik auswertbar, um die Schnellverstellvorrichtungen bei Bedarf auszulösen. Alternativ können Sensorik und Auslösevorrichtung als eine rein mechanische Baueinheit ausgebildet sein.

Bekannte Schnellverstellvorrichtungen bei Gurtstraffern oder Sitzelementen, wie z. B. Sitzrampen oder Kopfstützen, weisen beispielsweise eine explosive Ladung auf, welche in einer kritischen Fahrsituation zündbar ist und den Sicherheitsgurt strafft oder ein Sitzelement in eine andere Position bringt. Derartige Schnellverstellvorrichtungen haben den Nachteil, dass die Ladung nach der Zündung verbraucht ist und die explosive Ladung in einer Werkstatt neu beladen werden muss. Ereignet sich z. B. zwischen dem Straffen des Sicherheitsgurts und dem neuen Beladen des Gurtstraffers ein Unfall, ist der Gurtstraffer außer Funktion. Selbiges gilt natürlich auch für die Sitzschnellverstellvorrichtungen. Der betroffene Insasse des Kraftfahrzeugs ist dann nicht mehr optimal geschützt. Eine alternative Ausführungsform z. B. eines Gurtstraffers weist anstatt der explosiven Ladung einen Elektromotor auf, welcher bei einer kritischen Fahrsituation aktivierbar ist und den Sicherheitsgurt strafft. Selbiges ist auch an den Sitzkomponentenverstellern wie Kopfstütze oder Rampe möglich. Derartige Elektromotoren können zeitlich voneinander beabstandete Schnellverstellungen meistens problemlos bewältigen. Gleichwohl weisen derartige Elektromotoren meist notwendigerweise mit Getriebe zumeist einen relativ großen Bauraumbedarf sowie ein hohes Eigengewicht auf, um ausreichend Leistung für einen Schnellverstellvorgang bereitzustellen. Dies ist insbesondere bei einem stark begrenzten Bauraum von Nachteil. Ferner steigt ein Energieverbrauch eines Kraftfahrzeugs mit dessen Gewicht, sodass derartige Elektromotoren einen höheren Energieverbrauch des Kraftfahrzeugs bewirken.

Zur Reduzierung des Gewichts von Schnellverstellvorrichtungen, wie z. B. Gurtstraffern, können daher Elektroflachmotoren verwendet werden. Bei einem Elektroflachmotor ist ein Läufer zwischen zwei plattenförmig ausgebildeten Statorhälften drehbar gelagert. Derartige Elektroflachmotoren mit seitlich angeordneten sogenannten Luftspulen weisen gegenüber herkömmlichen Elektromotoren einen reduzierten Bauraumbedarf auf. Herkömmliche Elektroflachmotoren haben allerdings den Nachteil, dass ein maximales Drehmoment verhältnismäßig gering ist. Zudem neigen Elektroflachmotoren bei hoher Belastung zu einem Durchbrennen, da diese zur Erzeugung eines hohen Drehmoments mit verhältnismäßig hohen Strömen angesteuert werden. Dies betrifft insbesondere Elektroflachmotoren, welche unter regelmäßiger hoher Belastung stehen. Schließlich kann es bei hoher Beanspruchung bei Elektroflachmotoren vorkommen, dass sich eine Statorhälfte aufgrund des starken Magnetfelds verbiegt. In Extremfällen können sich Statorhälfte und Läufer sogar berühren und den Läufer somit abbremsen und den Elektroflachmotor auf diese Weise beschädigen oder zerstören.

Die DE 25 02 871 A1 offenbart einen Rotor für einen Mikromotor, der eine Achse aufweist, auf welcher zwei getrennt voneinander angeordnete Scheiben aus ferromagnetischem Material befestigt sind. Alle auf derselben Scheibe angeordneten Magnete weisen die gleiche Polarität auf. Pole aus ferromagnetischem Material liegen zwischen diesen Magneten.

Die WO 2009/087376 A2 und die EP 2 243 209 A2 beschreiben einen Rotor für eine elektrische Maschine. Der Rotor weist eine erste Scheibe, eine zweite Scheibe und Magnete auf. Die Magnete werden in den Aussparungen der beiden Scheiben angeordnet.

Die WO 2014/108111 A2 offenbart einen Rotor mit einer ersten Scheibe, einer zweiten Scheibe und Magneten, welche in Aussparungen der beiden Scheiben angeordnet sind.

Es ist daher Aufgabe der vorliegenden Erfindung, die voranstehend beschriebenen Nachteile bei einem Verfahren zur Herstellung eines Läufers für einen Elektroflachmotor, einem Läufer für einen Elektroflachmotor sowie einem Elektroflachmotor für einen Gurtstraffer eines Kraftfahrzeugs zu beheben oder zumindest teilweise zu beheben. Insbesondere ist es Aufgabe der vorliegenden Erfindung, ein Verfahren zur Herstellung eines Läufers, einen Läufer sowie einen Elektroflachmotor zu schaffen, die auf eine einfache und kostengünstige Art und Weise bei verbesserter oder zumindest gleichbleibender Leistung das Risiko des Durchbrennens des Elektroflachmotors reduzieren.

Voranstehende Aufgabe wird durch die Patentansprüche gelöst. Demnach wird die Aufgabe durch ein Verfahren zur Herstellung eines Läufers für einen Elektroflachmotor mit den Merkmalen des unabhängigen Anspruchs 1, durch einen Läufer für einen Elektroflachmotor mit den Merkmalen des nebengeordneten Anspruchs 7 sowie durch einen Elektroflachmotor für einen Gurtstraffer eines Kraftfahrzeugs mit den Merkmalen des nebengeordneten Anspruchs 15 gelöst. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Läufer sowie dem erfindungsgemäßen Elektroflachmotor und jeweils umgekehrt, sodass bezüglich der Offenbarung zu den einzelnen Erfindungsaspekten stets wechselseitig Bezug genommen wird beziehungsweise werden kann.

Gemäß dem ersten Aspekt der Erfindung wird die Aufgabe durch ein Verfahren zur Herstellung eines Läufers für einen Elektroflachmotor gelöst. Das Verfahren weist die folgenden Verfahrensschritte auf:
- Bereitstellen einer ersten Läuferscheibe mit einem ersten Scheibengrundkörper und an dem ersten Scheibengrundkörper angeordneten, voneinander beabstandeten ersten Permanentmagneten,
- Bereitstellen einer zweiten Läuferscheibe mit einem zweiten Scheibengrundkörper,
- Bereitstellen von zweiten Permanentmagneten, und
- Zusammenführen der ersten Läuferscheibe mit der zweiten Läuferscheibe derart, dass die ersten Permanentmagnete und die zweiten Permanentmagnete abwechselnd nebeneinander zwischen dem ersten Scheibengrundkörper und dem zweiten Scheibengrundkörper angeordnet sind, wobei erste magnetischen Pole der ersten Permanentmagnete dem ersten Scheibengrundkörper und erste magnetischen Pole der zweiten Permanentmagnete der zweiten Läuferscheibe zugewandt sind.

Dabei werden die ersten Permanentmagnete und die zweiten Permanentmagnete derart angeordnet, dass benachbarte erste Permanentmagnete und zweite Permanentmagnete einander kontaktieren.

Die bereitgestellte erste Läuferscheibe weist den ersten Scheibengrundkörper sowie eine Mehrzahl erster Permanentmagnete auf. Die ersten Permanentmagnete sind voneinander beabstandet an dem ersten Scheibengrundkörper angeordnet. Vorzugsweise sind die ersten Permanentmagnete in Umfangsrichtung gleichmäßig über den ersten Scheibengrundkörper verteilt. Es kann beispielsweise vorgesehen sein, dass die ersten Permanentmagnete auf den ersten Scheibengrundkörper geklebt werden. Die ersten Permanentmagnete weisen jeweils einen ersten magnetischen Pol und einen dem ersten magnetischen Pol entgegengesetzten zweiten magnetischen Pol auf, wobei der erste magnetische Pol dem ersten Scheibengrundkörper zugewandt ist bzw. diesen direkt oder über eine Klebeschicht oder dergleichen kontaktiert. Der erste magnetische Pol kann beispielsweise als magnetischer Nordpol oder Südpol ausgebildet sein, wobei der zweite magnetische Pol dementsprechend als der entgegengesetzte magnetische Südpol bzw. Nordpol ausgebildet ist. Die ersten Permanentmagnete sind vorzugsweise kreisringsegmentförmig ausgebildet und schließen weiter bevorzugt in radialer Richtung nach außen bündig mit dem ersten Scheibengrundkörper ab. Die ersten Permanentmagnete weisen vorzugsweise erste Seitenflächen auf, welche senkrecht oder zumindest im Wesentlichen senkrecht zum ersten Scheibengrundkörper angeordnet sind. Der erste Scheibengrundkörper ist vorzugsweise magnetisch leitend ausgebildet. Weiter bevorzugt ist der erste Scheibengrundkörper nicht oder kaum magnetisierbar ausgebildet. Vorzugsweise ist der erste Scheibengrundkörper als Blechscheibe ausgebildet. Weiter bevorzugt weist der erste Scheibengrundkörper einen hohlzylinderförmig ausgebildeten Lagerhals zur Aufnahme einer Lageraufnahme auf, welcher sich koaxial um eine Rotationsachse des ersten Scheibengrundkörpers herum erstreckt. Alternativ weist der erste Scheibengrundkörper einen sich um die Rotationsachse des ersten Scheibengrundkörpers erstreckenden Lagernapf zur Aufnahme der Lageraufnahme auf. Der Lagernapf weist auf einer den ersten Permanentmagneten abgewandten Seite einen geschlossenen Boden auf. Ebenfalls bevorzugt weist die erste Läuferscheibe eine von einem Sensor detektierbare Markierung zur Bestimmung einer Drehzahl und/oder eines Drehwinkels des Läufers auf. Die Markierung ist vorzugsweise auf einer den ersten Permanentmagneten zugewandten Seite und/oder einer den ersten Permanentmagneten abgewandten Seite des ersten Scheibengrundkörpers angeordnet.

Die bereitgestellte zweite Läuferscheibe weist zumindest den zweiten Scheibengrundkörper auf. Der zweite Scheibengrundkörper ist vorzugsweise magnetisch leitend ausgebildet. Weiter bevorzugt ist der zweite Scheibengrundkörper nicht oder kaum magnetisierbar ausgebildet. Vorzugsweise ist der zweite Scheibengrundkörper als Blechscheibe ausgebildet. Weiter bevorzugt weist der zweite Scheibengrundkörper einen hohlzylinderförmig ausgebildeten Lagerhals zur Aufnahme einer Lageraufnahme auf, welcher sich koaxial um eine Rotationsachse des zweiten Scheibengrundkörpers herum erstreckt. Alternativ, wenn der erste Scheibengrundkörper einen Lagernapf aufweist, ist der zweite Scheibengrundkörper vorzugsweise im Bereich der Rotationsachse als Napfdeckel ausgebildet. Ebenfalls bevorzugt weist die zweite Läuferscheibe eine von einem Sensor detektierbare Markierung zur Bestimmung einer Drehzahl und/oder eines Drehwinkels des Läufers auf. Die Markierung ist vorzugsweise auf einer den ersten Permanentmagneten zugewandten Seite und/oder einer den ersten Permanentmagneten abgewandten Seite des zweiten Scheibengrundkörpers angeordnet. Es ist erfindungsgemäß bevorzugt, dass die erste Läuferscheibe und die zweite Läuferscheibe als Gleichteil ausgebildet sind.

Die zweiten Permanentmagnete weisen jeweils den ersten magnetischen Pol und den zweiten magnetischen Pol auf. Nach dem Zusammenfügen ist der erste magnetische Pol dem zweiten Scheibengrundkörper zugewandt. Die zweiten Permanentmagnete sind vorzugsweise kreisringsegmentförmig ausgebildet und schließen weiter bevorzugt nach dem Zusammenfügen in radialer Richtung nach außen bündig mit dem zweiten Scheibengrundkörper ab. Ferner sind die zwei zweiten Permanentmagnete nach dem Zusammenfügen voneinander beabstandet. Vorzugsweise weisen die zweiten Permanentmagnete eine Form und Größe auf, welche einer Form und Größer der ersten Permanentmagnete entspricht oder zumindest im Wesentlichen entspricht. Die zweiten Permanentmagnete weisen vorzugsweise zweite Seitenflächen auf, welche nach dem Zusammenfügen senkrecht oder zumindest im Wesentlichen senkrecht zum zweiten Scheibengrundkörper angeordnet sind.

In einem Zwischenschritt kann erfindungsgemäß vorgesehen sein, dass eine Lageraufnahme zur Aufnahme eines Lagers oder zum Bereitstellen einer Laufbahn für einen Wälzkörper an der ersten Läuferscheibe oder der zweiten Läuferscheibe angeordnet wird. Die Lageraufnahme ist vorzugsweise als Sinterteil ausgebildet. Vorzugsweise weist die Lageraufnahme in einem zentralen Bereich eine mit der Lageraufnahme drehfest verbundene Welle oder eine Aufnahme zur drehfesten Aufnahme einer Welle auf.

Die ersten Permanentmagnete und die zweiten Permanentmagnete werden derart angeordnet, dass benachbarte erste Permanentmagnete und zweite Permanentmagnete einander, insbesondere flächig, kontaktieren. Hierbei ist es bevorzugt, dass eine Kontaktfläche zwischen den ersten Permanentmagneten und den zweiten Permanentmagneten maximiert ist. Weiter bevorzugt werden die ersten Permanentmagnete und die zweiten Permanentmagnete spaltfrei nebeneinander angeordnet. Eine derartige Anordnung der Permanentmagnete hat den Vorteil, dass ein magnetischer Fluss des Läufers verbessert ist. Eine Leistung des Elektroflachmotors ist somit mit einfachen Mitteln sowie auf eine kostengünstige Art und Weise verbesserbar.

In einem weiteren Verfahrensschritt werden die zweiten Permanentmagnete bereitgestellt. Dies kann beispielsweise durch Anordnen an dem ersten Scheibengrundkörper und/oder Anordnen an dem zweiten Scheibengrundkörper erfolgen. Ebenso kann erfindungsgemäß vorgesehen sein, dass einige erste Permanentmagnete auch an dem zweiten Scheibengrundkörper angeordnet werden. Die zweiten Permanentmagnete werden vorzugsweise in den Freiräumen zwischen den ersten Permanentmagneten angeordnet. Gemäß einer bevorzugten Ausführungsform wird eine Gruppe benachbarter erster Permanentmagnete und zweiter Permanentmagnete an dem ersten Scheibengrundkörper sowie eine Gruppe erster Permanentmagnete und zweiter Permanentmagnete an dem zweiten Scheibengrundkörper angeordnet.

Anschließend werden erste Läuferscheibe und die zweite Läuferscheibe entlang einer Rotationsachse des Läufers aufeinander zu bewegt, sodass die ersten Permanentmagnete und die zweiten Permanentmagnete abwechselnd nebeneinander zwischen dem ersten Scheibengrundkörper und dem zweiten Scheibengrundkörper angeordnet sind. Zwischen einem ersten Permanentmagnet und einem benachbarten zweiten Permanentmagnet kann ein Spalt vorgesehen sein. Es kann zudem vorgesehen sein, dass die erste Läuferscheibe und die zweite Läuferscheibe zuvor an einer Rückhaltevorrichtung befestigt werden, um ein unkontrolliertes Zusammenprallen aufgrund etwaiger magnetischer Anziehung zu verhindern oder zumindest abzubremsen. Die erste Läuferscheibe und die zweite Läuferscheibe werden vorzugsweise derart zusammengeführt, dass zumindest nach dem Zusammenführen die ersten Permanentmagnete den zweiten Scheibengrundkörper und die zweiten Permanentmagnete den ersten Scheibengrundkörper kontaktieren.

Das erfindungsgemäße Verfahren zur Herstellung eines Läufers für einen Elektroflachmotor hat gegenüber bekannten Verfahren den Vorteil, dass ein besonders flacher Läufer mit einer hohen magnetischen Flussdichte mit einfachen Mitteln sowie kostengünstig herstellbar ist. Zudem ist ein Läufer herstellbar, welcher besonders ebene Oberflächen mit einer Ebenheitstoleranz von unter 1/10 mm sowie einer hohen Parallelitätsgenauigkeit von über 99,9% aufweist.

Vorzugsweise sind die ersten Permanentmagnete beim Bereitstellen der ersten Läuferscheibe derart voneinander beabstandet an dem ersten Scheibengrundkörper angeordnet, dass jeweils zwischen zwei ersten Permanentmagneten ein erster Freiraum ausgebildet ist, wobei der erste magnetische Pol der ersten Permanentmagnete dem ersten Scheibengrundkörper zugewandt ist. Beim Bereitstellen der zweiten Läuferscheibe sind die zweiten Permanentmagnete derart voneinander beabstandet an dem zweiten Scheibengrundkörper angeordnet, dass jeweils zwischen zwei zweiten Permanentmagneten ein zweiter Freiraum ausgebildet ist, wobei der erste magnetische Pol der zweiten Permanentmagnete dem zweiten Scheibengrundkörper zugewandt ist. Um eine Beschädigung der Permanentmagnete bei der Montage zu vermeiden, sind die ersten Freiräume daher vorzugsweise geringfügig größer ausgebildet als die zweiten Permanentmagnete. Zudem weisen die Permanentmagnete vorzugsweise scharfe Kanten, insbesondere mit einem Kantenwinkel von 90°, auf, sodass im montierten Zustand benachbarte Permanentmagnete besonders dicht und bündig aneinander anliegen.

Das Zusammenführen erfolgt derart, dass die ersten Permanentmagnete von den zweiten Freiräumen und die zweiten Permanentmagnete von den ersten Freiräumen aufgenommen sind. Es kann beispielsweise vorgesehen sein, dass die zweiten Permanentmagnete vor dem Zusammenfügen auf den zweiten Scheibengrundkörper geklebt werden. Die erste Läuferscheibe und die zweite Läuferscheibe werden anschließend derart zueinander positioniert, dass die ersten Permanentmagnete in einer Flucht mit den zweiten Freiräumen und die zweiten Permanentmagnete in einer Flucht mit den ersten Freiräumen ausgerichtet sind. Hierfür wird vorzugsweise eine Führungsvorrichtung verwendet, um ein gegenseitiges Wegdrücken der ersten Läuferscheibe und der zweiten Läuferscheibe aufgrund der sich abstoßenden ersten Permanentmagnete und zweiten Permanentmagnete zu verhindern. Anschließend werden erste Läuferscheibe und die zweite Läuferscheibe entlang einer Rotationsachse des Läufers aufeinander zu bewegt, sodass die ersten Permanentmagnete in die zweiten Freiräume und die zweiten Permanentmagnete in die zweiten Freiräume, wie beispielsweise bei einer Klauenkupplung, eingreifen. Nachdem Eingreifen ziehen sich die ersten Permanentmagnete und die zweiten Permanentmagnete gegenseitig an, sodass ein weiteres Aufeinanderzubewegen der ersten Läuferscheibe und der zweiten Läuferscheibe erleichtert wird. Vorzugsweise werden die erste Läuferscheibe und die zweite Läuferscheibe zuvor an einer Rückhaltevorrichtung befestigt, um ein unkontrolliertes Zusammenprallen aufgrund der magnetischen Anziehung zu verhindern oder zumindest abzubremsen. Die erste Läuferscheibe und die zweite Läuferscheibe werden vorzugsweise zumindest solange zusammengeführt, bis die ersten Permanentmagnete den zweiten Scheibengrundkörper und die zweiten Permanentmagnete den ersten Scheibengrundkörper kontaktieren. Dies hat insbesondere den Vorteil, dass Aufgrund der gegenseitigen Anziehung der ersten Permanentmagnete und der zweiten Permanentmagnete die Montage der ersten Läuferscheibe mit der zweiten Läuferscheibe wesentlich erleichtert ist.

Gemäß einer alternativen Ausführungsform des Verfahrens sind beim Bereitstellen der ersten Läuferscheibe die zweiten Permanentmagnete und die ersten Permanentmagnete abwechselnd nebeneinander an dem ersten Scheibengrundkörper angeordnet. Die ersten magnetischen Pole der ersten Permanentmagnete sind dem ersten Scheibengrundkörper zugewandt und die ersten magnetischen Pole der zweiten Permanentmagnete sind dem zweiten Scheibengrundkörper zugewandt. Eine derartige Ausführungsform des Verfahrens hat den Vorteil, dass ein Zusammenführen der ersten Läuferscheibe mit der zweiten Läuferscheibe verbessert ist.

Zudem kann erfindungsgemäß vorgesehen sein, dass beim Bereitstellen der zweiten Läuferscheibe die zweiten Permanentmagnete und die ersten Permanentmagnete abwechselnd nebeneinander an dem zweiten Scheibengrundkörper angeordnet sind. Das Zusammenführen erfolgt derart, dass erste magnetische Pole der ersten Permanentmagnete mit zweiten magnetischen Polen der zweiten Permanentmagnete zusammengeführt werden. Ein Zusammenführen der ersten Läuferscheibe mit der zweiten Läuferscheibe ist somit weiter verbessert.

Gemäß einer bevorzugten Weiterentwicklung der Erfindung kann bei einem Verfahren vorgesehen sein, dass die erste Läuferscheibe und die zweite Läuferscheibe miteinander verpresst werden. Das Verpressen erfolgt vorzugsweise mittels einer hierfür ausgebildeten Pressvorrichtung. Das Verpressen wird vorzugsweise derart durchgeführt, dass der erste Scheibengrundkörper und/oder der zweite Scheibengrundkörper zumindest stellenweise verformt werden, sodass die erste Läuferscheibe und die zweite Läuferscheibe reibschlüssig und/oder formschlüssig miteinander verbunden werden. Ein Verpressen hat den Vorteil, dass mit einfachen Mitteln sowie auf eine kostengünstige Art und Weise ein fester Zusammenhalt der ersten Läuferscheibe mit der zweiten Läuferscheibe erzielbar ist. Zudem lassen sich hierdurch kleine Zwischenräume oder Spalte zwischen der ersten Läuferscheibe und der zweiten Läuferscheibe verschließen, sodass der Läufer in diesen Bereichen eine verbesserte Abdichtung und somit einen verbesserten Schutz vor Umwelteinflüssen, wie z.B. Feuchtigkeit, Schmutz oder dergleichen, aufweist.

Es ist erfindungsgemäß bevorzugt, dass die erste Läuferscheibe und die zweite Läuferscheibe miteinander verklebt werden. Hierfür wird ein Klebstoff vorzugsweise dem Zusammenführen der ersten Läuferscheibe und der zweiten Läuferscheibe angebracht. Vorzugsweise wird der Klebstoff als Dünnschicht in die ersten Freiraume, insbesondere auf den ersten Scheibengrundkörper, und/oder die zweiten Freiräume, insbesondere auf den zweiten Scheibengrundkörper, eingebracht, z.B. durch Sprühen. Ein Kleben hat den Vorteil, dass mit einfachen Mitteln sowie auf eine kostengünstige Art und Weise ein fester Zusammenhalt der ersten Läuferscheibe mit der zweiten Läuferscheibe erzielbar ist. Zudem lassen sich durch den Klebstoff kleine Zwischenräume oder Spalte zwischen der ersten Läuferscheibe und der zweiten Läuferscheibe verschließen, sodass der Läufer in diesen Bereichen eine verbesserte Abdichtung und somit einen verbesserten Schutz vor Umwelteinflüssen, wie z.B. Feuchtigkeit, Schmutz oder dergleichen, aufweist.

Vorzugsweise werden die ersten Permanentmagnete auf die erste Läuferscheibe und/oder die zweiten Permanentmagnete auf die zweite Läuferscheibe geklebt. Das Kleben der ersten Permanentmagnete auf die erste Läuferscheibe kann vor dem Bereitstellen oder gleichzeitig mit dem Bereitstellen der ersten Läuferscheibe erfolgen. Entsprechend kann das Kleben der zweiten Permanentmagnete auf die zweite Läuferscheibe kann vor dem Bereitstellen oder gleichzeitig mit dem Bereitstellen der zweiten Läuferscheibe erfolgen. Durch das Kleben ist eine stoffschlüssige Verbindung zwischen den jeweiligen Permanentmagneten und der jeweiligen Läuferscheibe erzielbar. Somit hat ein derartiges Kleben den Vorteil, dass bei der Montage des Läufers ein sicherer Halt der Permanentmagnete an der jeweiligen Läuferscheibe gewährleistet ist, sodass das Risiko eines unbeabsichtigten Ablösens der Permanentmagnete während der Handhabung bzw. Montage der Läuferscheiben reduziert ist.

Gemäß einem zweiten Aspekt der Erfindung wird die Aufgabe durch einen Läufer für einen Elektroflachmotor gelöst. Der Läufer weist eine erste Läuferscheibe mit einem ersten Scheibengrundkörper und eine zweite Läuferscheibe mit einem zweiten Scheibengrundkörper auf. Erfindungsgemäß sind zwischen dem ersten Scheibengrundkörper und dem zweiten Scheibengrundkörper erste Permanentmagnete und zweite Permanentmagnete angeordnet, wobei die ersten Permanentmagnete und die zweiten Permanentmagnete abwechselnd nebeneinander zwischen dem ersten Scheibengrundkörper und dem zweiten Scheibengrundkörper angeordnet sind. Erste magnetischen Pole der ersten Permanentmagnete sind dem ersten Scheibengrundkörper und erste magnetischen Pole der zweiten Permanentmagnete der zweiten Läuferscheibe zugewandt. Dabei sind die ersten Permanentmagnete und die zweiten Permanentmagnete derart angeordnet, dass benachbarte erste Permanentmagnete und zweite Permanentmagnete einander kontaktieren.

Der Läufer weist eine Mehrzahl, insbesondere 8 oder 12, erster Permanentmagnete auf. Die ersten Permanentmagnete sind voneinander beabstandet an dem ersten Scheibengrundkörper der ersten Läuferscheibe angeordnet. Es kann beispielsweise vorgesehen sein, dass die ersten Permanentmagnete auf den ersten Scheibengrundkörper und/oder den zweiten Scheibengrundkörper geklebt sind. Die ersten Permanentmagnete weisen jeweils einen ersten magnetischen Pol und einen dem ersten magnetischen Pol entgegengesetzten zweiten magnetischen Pol auf, wobei der erste magnetische Pol dem ersten Scheibengrundkörper zugewandt ist bzw. diesen direkt oder über eine Klebeschicht oder dergleichen kontaktiert. Der erste magnetische Pol kann beispielsweise als magnetischer Nordpol oder Südpol ausgebildet sein, wobei der zweite magnetische Pol dementsprechend als der entgegengesetzte magnetische Südpol bzw. Nordpol ausgebildet ist.

Der Läufer weist eine Mehrzahl, insbesondere 8 oder 12, voneinander beabstandeter zweiter Permanentmagnete auf. Die zweiten Permanentmagnete sind jeweils zwischen zwei ersten Permanentmagneten angeordnet. Es kann beispielsweise vorgesehen sein, dass die zweiten Permanentmagnete auf den zweiten Scheibengrundkörper und/oder den ersten Scheibengrundkörper geklebt sind. Die zweiten Permanentmagnete weisen jeweils den ersten magnetischen Pol und den zweiten magnetischen Pol auf, wobei der erste magnetische Pol dem zweiten Scheibengrundkörper zugewandt ist bzw. diesen direkt oder über eine Klebeschicht oder dergleichen kontaktiert.

Die erste Läuferscheibe und die zweite Läuferscheibe sind vorzugsweise derart zueinander angeordnet, dass die erste Läuferscheibe und die zweite Läuferscheibe jeweils die ersten Permanentmagnete sowie die zweiten Permanentmagnete direkt, über eine Klebeschicht oder dergleichen kontaktiert. Vorzugsweise stehen die ersten Permanentmagnete und die zweiten Permanentmagnete gemäß einer Klauenkupplung miteinander im Eingriff.

Bei dem erfindungsgemäßen Läufer ergeben sich dieselben Vorteile, wie bereits voranstehend zu einem Verfahren zur Herstellung eines Läufers für einen Elektroflachmotor beschrieben sind. Demnach hat der erfindungsgemäße Läufer gegenüber herkömmlichen Läufern den Vorteil, dass dieser mit einfachen Mitteln sowie kostengünstig herstellbar ist. Zudem ist der erfindungsgemäße Läufer besonders flach sowie mit einer hohen magnetischen Flussdichte dimensionierbar. Zudem sind bei dem Läufer besonders ebene Oberflächen mit einer Ebenheitstoleranz von unter 1/10 mm sowie einer hohen Parallelitätsgenauigkeit von über 99,9% mit einfachen Mitteln gewährleistbar.

Vorzugsweise ist der Läufer gemäß einem erfindungsgemäßen Verfahren hergestellt. Das erfindungsgemäße Verfahren ist kostengünstig durchführbar und zur Herstellung eines gattungsgemäßen Läufers besonders geeignet.

Gemäß einer bevorzugten Weiterbildung der Erfindung kann bei einem Läufer vorgesehen sein, dass der erste Scheibengrundkörper und/oder der zweite Scheibengrundkörper als Metallscheibe ausgebildet sind. Die Metallscheibe ist vorzugsweise magnetisch leitend ausgebildet. Weiter bevorzugt ist die Metallscheibe nicht oder nur schwer magnetisierbar ausgebildet. Vorzugsweise ist die Metallscheibe als Blechscheibe ausgebildet. Eine Metallscheibe hat den Vorteil, dass diese mit einfachen Mitteln sowie kostengünstig herstellbar ist. Ferner sind die Permanentmagnete mittels einer Metallscheibe vor äußeren Einflüssen, wie z.B. Staub, Feuchtigkeit oder dergleichen, schützbar. Ein weiterer Vorteil einer Metallscheibe ist die Weiterverarbeitbarkeit, insbesondere im Rahmen eines Pressverfahrens.

Weiter bevorzugt weisen die ersten Permanentmagnete dieselbe oder zumindest im Wesentlichen dieselbe Form und Größe wie die zweiten Permanentmagnete auf, wobei zwischen ersten Permanentmagneten und zweiten Permanentmagneten ein möglichst kleiner Spalt ausgebildet ist. Unter derselben oder zumindest im Wesentlichen derselben Form und Größe wird erfindungsgemäß verstanden, dass aus fertigungs- bzw. montagetechnischen Gründen notwendige Maß- und/oder Formabweichungen berücksichtigt sind. Eine derartige Ausgestaltung hat den Vorteil, dass ein vom Läufer bereitgestelltes Magnetfeld eine besonders hohe und somit vorteilhafte magnetische Flussdichte aufweist. Die Leistung und ein Wirkungsgrad eines Elektroflachmotors sind somit verbesserbar.

In einer besonders bevorzugten Ausgestaltung der Erfindung kann bei einem Läufer vorgesehen sein, dass die ersten Freiräume dieselbe Form und Größe wie die ersten Permanentmagnete aufweisen. Unter derselben Form und Größe wird erfindungsgemäß verstanden, dass aus fertigungs- bzw. montagetechnischen Gründen notwendige Maß- und/oder Formabweichungen berücksichtigt sind. Um eine Beschädigung der Permanentmagnete bei der Montage zu vermeiden, sind die ersten Freiräume daher vorzugsweise geringfügig größer ausgebildet als die ersten Permanentmagnete. Zudem weisen die ersten Permanentmagnete und/oder die zweiten Permanentmagnete vorzugsweise scharfe Kanten, insbesondere mit einem Kantenwinkel von 90°, auf, sodass im montierten Zustand benachbarte Permanentmagnete besonders dicht und bündig aneinander anliegen können. Vorzugsweise weisen die zweiten Freiräume dieselbe Form und Größe wie die zweiten Permanentmagnete auf. Eine Bestückung des zweiten Scheibengrundkörpers mit zweiten Permanentmagneten entspricht somit einer Bestückung des ersten Scheibengrundkörpers mit ersten Permanentmagneten. Vorzugsweise sind die erste Läuferscheibe und die zweite Läuferscheibe als Gleichteile ausgebildet, sodass die zweite Läuferscheibe mit der ersten Läuferscheibe identisch oder zumindest im Wesentlichen identisch ausgebildet ist. Unter um Wesentlichen Identisch wird eine identische Form und Größer verstanden, wobei die Läuferscheiben unterscheidende Merkmale, wie z.B. Markierungen, Bohrungen oder dergleichen, aufweisen können. Eine derartige Ausgestaltung hat den Vorteil, dass die ersten Permanentmagnete gleichmäßig über den ersten Scheibengrundkörper verteilt sind, sodass ein besonders regelmäßiges Magnetfeld bereitgestellt ist. Auf diese Weise ist ebenfalls ein Läufer mit einer besonders hohen und somit vorteilhaften magnetische Flussdichte bereitstellbar. Die Leistung und ein Wirkungsgrad eines Elektroflachmotors sind somit verbesserbar.

Vorzugsweise weisen die ersten Permanentmagnete erste Seitenflächen auf, wobei die ersten Seitenflächen senkrecht oder im Wesentlichen senkrecht zum ersten Scheibengrundkörper angeordnet sind. Weiter bevorzugt weisen die zweiten Permanentmagnete zweite Seitenflächen auf, wobei die zweiten Seitenflächen senkrecht oder im Wesentlichen senkrecht zum zweiten Scheibengrundkörper angeordnet sind. Unter einer senkrechten Anordnung wird erfindungsgemäß verstanden, dass die ersten Seitenflächen bzw. zweiten Seitenflächen in einem Winkel von 90° zum ersten Scheibengrundkörper bzw. zweiten Scheibengrundkörper angeordnet sind. Mittels einer derartigen Ausbildung der Seitenflächen weist der Läufer ein besonders regelmäßiges Magnetfeld mit hoher magnetischer Flussdichte auf. Die Leistung und ein Wirkungsgrad eines Elektroflachmotors sind somit verbesserbar.

Gemäß einer bevorzugten Ausführungsform der Erfindung weisen die ersten Permanentmagnete eine kreisringsegmentförmige Grundfläche auf. Weiter bevorzugt weisen die zweiten Permanentmagnete eine kreisringsegmentförmige Grundfläche auf. Vorzugsweise schließen die ersten Permanentmagnete in radialer Richtung nach außen bündig mit dem ersten Scheibengrundkörper ab. Weiter bevorzugt schließen die zweiten Permanentmagnete in radialer Richtung nach außen bündig mit dem zweiten Scheibengrundkörper ab. Mit kreisringsegmentförmigen Grundflächen kann auf eine vorteilhafte sowie kostengünstige Art und Weise aus den ersten Permanentmagneten und den zweiten Permanentmagneten ein kombinierter Permanentmagnet mit einer kreisringförmigen Grundfläche gebildet werden. Hierdurch sind eine magnetische Flussdichte des Läufers vergrößerbar und somit eine Leistung sowie ein Wirkungsgrad des Elektroflachmotors verbesserbar.

Besonders bevorzugt weist der Läufer eine Lageraufnahme zur Aufnahme eines Lagers oder zum Bereitstellen einer Laufbahn für einen Wälzkörper auf, wobei die Lageraufnahme in einem sich um eine Rotationsachse des ersten Scheibengrundkörpers erstreckenden, hohlzylinderförmig ausgebildeten Lagerhals des ersten Scheibengrundkörpers angeordnet ist. Der Lagerhals und die darin angeordnete Lageraufnahme erstrecken sich vorzugsweise koaxial zur Rotationsachse des Läufers. Die Herstellung des Lagerhalses ist mit einfachen Mitteln sowie kostengünstig möglich. Die Lageraufnahme kann erfindungsgemäß an einer Innenseite oder einer Außenseite des Lagerhalses angeordnet sein. Vorzugsweise ist die Lageraufnahme über einen Presssitz an dem Lagerhals gehalten und gegen ein axiales Abgleiten gesichert. Vorzugsweise weist die Lageraufnahme einen Lagersitz zur Anordnung des Lagers, insbesondere eines Wälzlagers, auf. Das Lager ist beispielsweise in den Lagersitz einpressbar. Alternativ weist die Lageraufnahme eine Laufbahn für einen Wälzkörper auf. Eine derartige Laufbahn weist eine Laufoberfläche auf, welche vorzugsweise einen verhältnismäßig geringen Reibungskoeffizienten sowie eine verhältnismäßig große Härte aufweist, um auch bei hohen sowie langfristigen Belastungen einen geringen Verschleiß aufzuweisen. Eine Lageraufnahme hat den Vorteil, dass eine rotierbare Lagerung des Läufers an einer Statorvorrichtung des Elektroflachmotors mit einfachen Mitteln sowie auf eine kostengünstige Art und Weise realisierbar ist.

Gemäß einer alternativen Ausführungsform der Erfindung weist der Läufer eine Lageraufnahme zur Aufnahme eines Lagers oder zum Bereitstellen einer Laufbahn für einen Wälzkörper auf, wobei die Lageraufnahme in einem sich um eine Rotationsachse des ersten Scheibengrundkörpers erstreckenden, auf einer der zweiten Läuferscheibe abgewandten Seite geschlossenen Lagernapf des ersten Scheibengrundkörpers angeordnet ist. Der Lagernapf und die Lageraufnahme sind vorzugsweise koaxial zur Rotationsachse des Läufers angeordnet. Die Herstellung des Lagernapfes ist mit einfachen Mitteln sowie kostengünstig möglich. Die Lageraufnahme ist im Inneren des Lagertopfes angeordnet. Vorzugsweise ist die Lageraufnahme über einen Presssitz in dem Lagertopf gehalten und gegen ein axiales Abgleiten gesichert. Vorzugsweise weist die Lageraufnahme einen Lagersitz zur Anordnung des Lagers, insbesondere eines Wälzlagers, auf. Das Lager ist beispielsweise in den Lagersitz einpressbar. Alternativ weist die Lageraufnahme eine Laufbahn für einen Wälzkörper auf. Eine derartige Laufbahn weist eine Laufoberfläche auf, welche vorzugsweise einen verhältnismäßig geringen Reibungskoeffizienten sowie eine verhältnismäßig große Härte aufweist, um auch bei hohen sowie langfristigen Belastungen einen geringen Verschleiß aufzuweisen. Vorzugsweise weist der zweite Scheibengrundkörper einen Napfdeckel zum Abdecken des Lagernapfes auf. Eine Lageraufnahme hat den Vorteil, dass eine rotierbare Lagerung des Läufers an einer Statorvorrichtung des Elektroflachmotors mit einfachen Mitteln sowie auf eine kostengünstige Art und Weise realisierbar ist. Zudem hat der Lagertopf den Vorteil, dass die Lageraufnahme zumindest einseitig gegen Umwelteinflüsse, wie z.B. Staub, Schmutz, Feuchtigkeit oder dergleichen, geschützt ist. Mittels eines Lagerdeckels ist ein Schutz der Lageraufnahme vor Umwelteinflüsse weiter verbesserbar. Eine Lebensdauer der Lagerung bzw. des Elektroflachmotors ist somit verbesserbar.

Es ist erfindungsgemäß bevorzugt, dass die Lageraufnahme als Sinterteil ausgebildet ist. Ein Sinterteil ist mit einfachen Mitteln sowie kostengünstig herstellbar. Zudem sind Sinterteile auch in einer Großserienfertigung wirtschaftlich herstellbar. Sinterteile sind mit hohen Oberflächengüten, Maß- sowie Formgenauigkeit und hoher mechanischer Belastbarkeit herstellbar.

Vorzugsweise weist die Lageraufnahme in einem zentralen Bereich eine mit der Lageraufnahme drehfest verbundene Welle oder eine Aufnahme zur drehfesten Aufnahme einer Welle auf. Die Aufnahme weist vorzugsweise einen Formschlussabschnitt auf, welcher mit einem entsprechenden Gegenformschlussabschnitt der Welle zur drehfesten Aufnahme der Welle mechanisch koppelbar ist. Alternativ kann die Welle durch Pressen, Kleben, Schweißen, Schrauben oder dergleichen drehfest an der Aufnahme gehalten sein. Mittels der Welle ist ein Motordrehmoment des Elektroflachmotors abgreifbar.

Überdies ist es bevorzugt, dass die erste Läuferscheibe eine von einem Sensor, insbesondere einem optischen Sensor, detektierbare Markierung zur Bestimmung einer Drehzahl und/oder eines Drehwinkels des Läufers aufweist. Zusätzlich oder alternativ weist die zweite Läuferscheibe oder die Lageraufnahme eine von einem Sensor detektierbare Markierung zur Bestimmung einer Drehzahl und/oder eines Drehwinkels des Läufers auf. Es ist bevorzugt, dass die Markierung am ersten Scheibengrundkörper und/oder dem zweiten Scheibengrundkörper, insbesondere im Bereich eines Lagerhalses, Lagertopfes oder dergleichen, angeordnet ist. Es ist erfindungsgemäß weiter bevorzugt, dass die Markierung auf einer der zweiten Läuferscheibe zugewandten Seite und/oder einer der zweiten Läuferscheibe abgewandten Seite des ersten Scheibengrundkörpers angeordnet ist. Die Markierung ist vorzugsweise an einer Stelle am Läufer angeordnet, welche von einem an der Statorvorrichtung angeordneten Sensor optisch abtastbar ist. Zudem ist die Markierung ist vorzugsweise an einer Stelle am Läufer angeordnet, welche vor Verschmutzungen geschützt ist, sodass ein optisches Abtasten der Markierung auch nach längerem Betrieb des Elektroflachmotors gewährleistet ist. Eine Markierung ist mit einfachen Mitteln, wie z.B. durch Stanzen, Gravieren, Schneiden oder dergleichen sowie kostengünstig erzeugbar. Vorzugsweise ist die Markierung mittels eines Lasers, einer mechanischen Schneidvorrichtung, einer Prägevorrichtung oder dergleichen erzeugt. Eine Markierung hat den Vorteil, dass hiermit das Ermitteln einer Drehzahl und einer Drehwinkelstellung des Läufers verbessert ist.

Gemäß einem dritten Aspekt der Erfindung wird die Aufgabe durch einen Elektroflachmotor für eine Schnellverstellvorrichtung, insbesondere einen Gurtstraffer, eines Kraftfahrzeugs gelöst. Der Elektroflachmotor weist eine Statorvorrichtung und einen Läufer auf. Erfindungsgemäß ist der Läufer als erfindungsgemäßer Läufer ausgebildet. Vorzugsweise weist der Elektroflachmotor ein Gehäuse auf, wobei die Statorvorrichtung vorzugsweise als Gehäuse oder Teil des Gehäuses ausgebildet ist. Die Statorvorrichtung weist vorzugsweise eine Magnetspule oder eine magnetspulenartig ausgebildete Platine zum Erzeugen eines magnetischen Erregerfelds zum Antreiben des Läufers auf. Weiter bevorzugt weist die Statorvorrichtung einen Statorrückschluss auf, wobei der Statorrückschluss vorzugsweise als Gehäuse oder Teil des Gehäuses des Elektroflachmotors ausgebildet ist.

Bei dem erfindungsgemäßen Elektroflachmotor für eine Schnellverstellvorrichtung eines Kraftfahrzeugs ergeben sich sämtliche Vorteile, die bereits zu einem Verfahren zur Herstellung eines Läufers für einen Elektroflachmotor gemäß dem ersten Aspekt der Erfindung sowie einem Läufer für einen Elektroflachmotor gemäß dem zweiten Aspekt der Erfindung beschrieben worden sind. Demnach hat der erfindungsgemäße Elektroflachmotor gegenüber herkömmlichen Elektroflachmotoren den Vorteil, dieser mit einfachen Mitteln sowie kostengünstig herstellbar ist. Zudem ist der erfindungsgemäße Elektroflachmotor aufgrund des erfindungsgemäßen Läufers besonders flach sowie mit einer hohen magnetischen Flussdichte dimensionierbar. Zudem sind bei dem Läufer des Elektroflachmotors besonders ebene Oberflächen mit einer Ebenheitstoleranz von unter 1/10 mm sowie einer hohen Parallelitätsgenauigkeit von über 99,9% mit einfachen Mitteln gewährleistbar. Aufgrund der gegenseitigen Anziehung der ersten Permanentmagnete und der zweiten Permanentmagnete ist die Montage der ersten Läuferscheibe mit der zweiten Läuferscheibe des Läufers des Elektroflachmotors wesentlich erleichtert. Somit sind die Herstellungskosten des Elektroflachmotors auf vorteilhafte Art und Weise reduzierbar.

Eine erfindungsgemäßes Verfahren zur Herstellung eines Läufers für einen Elektroflachmotor, ein erfindungsgemäßer Läufer für einen Elektroflachmotor sowie ein erfindungsgemäßer Elektroflachmotor für eine Schnellverstellvorrichtung eines Kraftfahrzeugs werden nachfolgend anhand von Zeichnungen näher erläutert. Es zeigen jeweils schematisch:
- Figur 1: in einer Draufsicht eine bevorzugte erste Ausführungsform einer ersten Läuferscheibe eines erfindungsgemäßen Läufers,
- Figur 2: in einer Seitenansicht eine bevorzugte zweite Ausführungsform einer ersten Läuferscheibe eines erfindungsgemäßen Läufers,
- Figur 3: in einer Draufsicht eine bevorzugte Ausführungsform einer Lageraufnahme eines erfindungsgemäßen Läufers,
- Figur 4: in einer Seitenansicht ein Zusammenführen einer ersten Läuferscheibe und einer zweiten Läuferscheibe gemäß dem erfindungsgemäßen Verfahren,
- Figur 5: in einer perspektivischen Ansicht eine bevorzugte erste Ausführungsform eines erfindungsgemäßen Läufers,
- Figur 6: in einer perspektivischen Ansicht eine bevorzugte zweite Ausführungsform eines erfindungsgemäßen Läufers,
- Figur 7: in einer perspektivischen Ansicht eine bevorzugte dritte Ausführungsform eines erfindungsgemäßen Läufers,
- Figur 8: in einer Draufsicht eine bevorzugte Ausführungsform eines erfindungsgemäßen Elektroflachmotors, und
- Figur 9: in einem Ablaufdiagramm eine bevorzugte Ausführungsform eines erfindungsgemäßen Verfahrens.

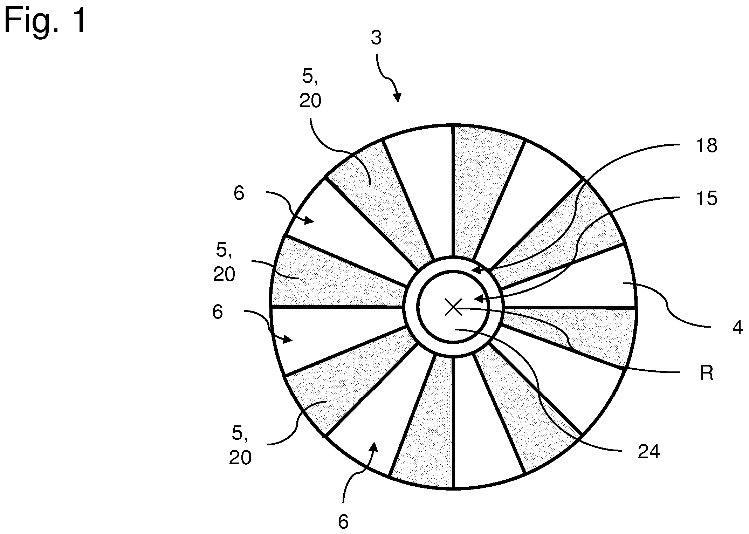

Elemente mit gleicher Funktion und Wirkungsweise sind in den Fig. 1 bis 9 jeweils mit denselben Bezugszeichen versehen.

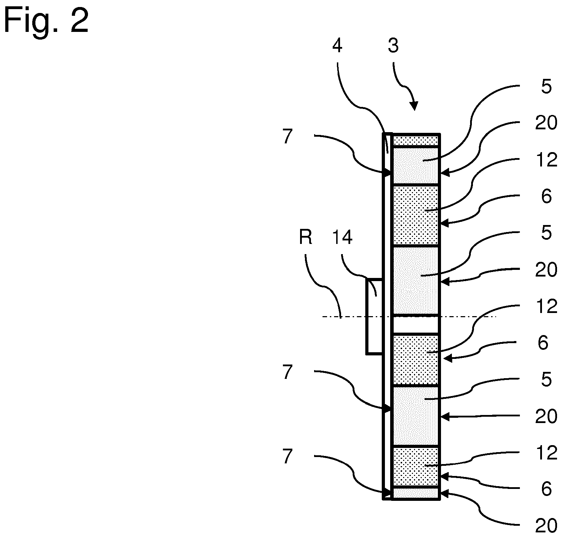

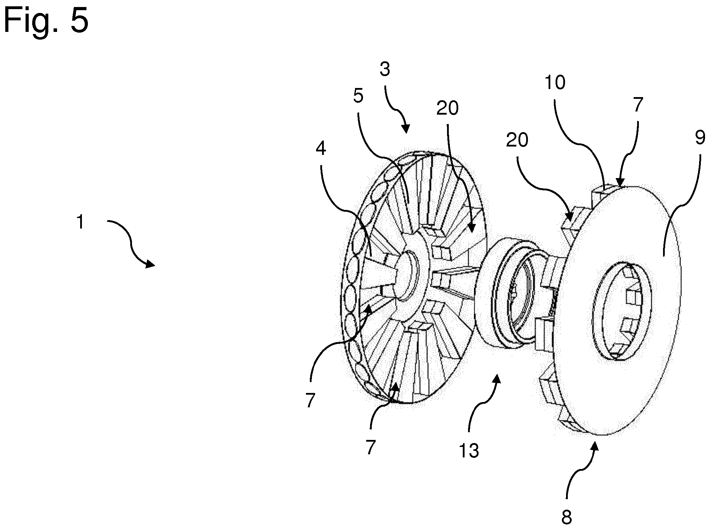

In Fig. 1 ist eine bevorzugte erste Ausführungsform einer ersten Läuferscheibe 3 eines erfindungsgemäßen Läufers 1 schematisch in einer Draufsicht abgebildet. Die erste Läuferscheibe 3 weist einen ersten Scheibengrundkörper 4 und eine Mehrzahl erster Permanentmagnete 5 mit einer Kreisringsegmentförmigen Grundfläche auf. Ein nicht erkennbarer erster magnetischer Pol 7 (vgl. Fig. 2) der ersten Permanentmagnete 5 ist dem ersten Scheibengrundkörper 4 zugewandt bzw. steht mit diesem in Kontakt. Ein zweiter magnetischer Pol 20 der ersten Permanentmagnete 5 ist dem ersten Scheibengrundkörper 4 abgewandt. Zwischen den ersten Permanentmagneten 5 sind erste Freiräume 6 ausgebildet, welche den ersten Permanentmagneten 5 in Form und Größe entsprechen. Die erste Läuferscheibe 3 weist eine Rotationsachse R auf. Um die Rotationsachse R erstreckt sich ein im ersten Scheibengrundkörper 4 ausgebildeter Lagernapf 15 mit einem Napfboden 24. Der Lagernapf 15 erstreckt sich in die Zeichenebene hinein, während sich die ersten Permanentmagnete 5 aus der Zeichenebene hervor erstrecken. Im Bereich des Lagernapfes 15 sind im ersten Scheibengrundkörper 4 Markierungen 18 zur Bestimmung einer Drehzahl und/oder eines Drehwinkels eines die erste Läuferscheibe 3 aufweisenden Läufers 1 (vgl. Fig. 5) ausgebildet.

In Fig. 2 ist eine bevorzugte zweite Ausführungsform einer ersten Läuferscheibe 3 eines erfindungsgemäßen Läufers 1 schematisch in einer Seitenansicht abgebildet. Die zweite Ausführungsform unterscheidet sich von der ersten Ausführungsform in dem Merkmal, dass anstatt eines Lagernapfes 15 ein hohlzylinderförmiger Lagerhals 14 in dem ersten Scheibengrundkörper 4 ausgebildet ist. Im Gegensatz zum Lagernapf 15 weist der Lagerhals 14 keinen Napfboden 24 auf und ist somit in Richtung der Rotationsachse R beidseitig offen. Wie aus Fig. 2 deutlich erkennbar ist, sind die ersten magnetischen Pole 7 der ersten Permanentmagnete 5 dem ersten Scheibengrundkörper 4 benachbart angeordnet. Die zweiten magnetischen Pole 20 weisen vom ersten Scheibengrundkörper 4 weg. Zudem sind in dieser Ansicht einige erste Seitenflächen 12 der ersten Permanentmagnete 5 erkennbar. Die ersten Seitenflächen erstrecken sich quer, insbesondere mit einem Winkel von 90°, sowie parallel zur Rotationsachse R von dem ersten Scheibengrundkörper 4 weg.

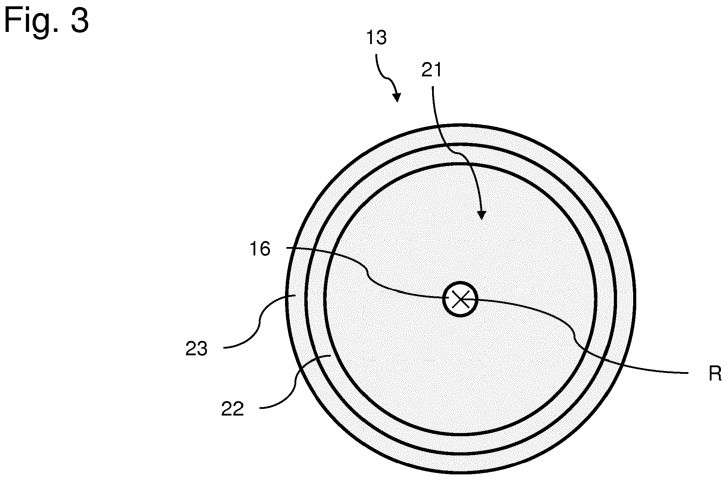

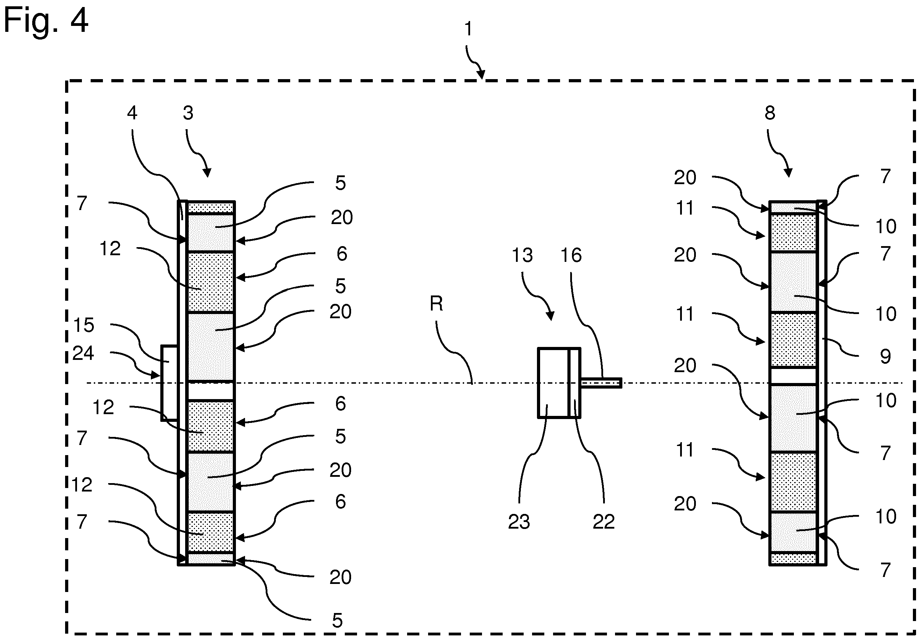

In Fig. 3 ist eine bevorzugte Ausführungsform einer Lageraufnahme 13 eines erfindungsgemäßen Läufers 1 (vgl. Fig. 5) schematisch in einer Draufsicht abgebildet. Die Lageraufnahme 13 ist scheibenförmig ausgebildet und erstreckt sich koaxial zur Rotationsachse R des Läufers 1. weist einen zentralen Aufnahmebereich 21 zur Aufnahme eines Lagers, insbesondere eines Wälzlagers, auf. Alternativ kann der Aufnahmebereich 21 eine nicht gezeigte Lauffläche für Wälzkörper aufweisen. Der Aufnahmebereich 21 ist durch eine sich aus der Zeichenebene heraus erstreckende Aufnahmewandung 22 in radialer Richtung begrenzt. Ferner weist die Lageraufnahme 13 einen relativ zur Aufnahmewandung 22 zurückgesetzten Anschlagring 23 auf. Der Anschlagring 23 ist vorzugsweise ausgebildet, montierten Zustand eine zweite Läuferscheibe 8 (vgl. Fig. 4) zu kontaktieren und ein Herausrutschen der Lageraufnahme 13 durch die zweite Läuferscheibe 8 formschlüssig zu verhindern. Koaxial zur Rotationsachse R ist eine Welle 16 drehfest an der Lageraufnahme 13 gehalten, insbesondere mittels eines nicht dargestellten Formschlussabschnitts der Lageraufnahme 13 im Zusammenspiel mit einem nicht dargestellten Gegenformschlussabschnitt der Welle 16. Die Lageraufnahme 13 ist vorzugsweise als Sinterteil ausgebildet.

In Fig. 4 ist ein Zusammenführen einer ersten Läuferscheibe 3 und einer zweiten Läuferscheibe 8 gemäß dem erfindungsgemäßen Verfahren zur Herstellung eines Läufers 1 schematisch in einer Seitenansicht abgebildet. Die erste Läuferscheibe 3 entspricht der in Fig. 1 abgebildeten ersten Läuferscheibe 3 und weist somit einen Lagernapf 15 auf. Die Zweite Läuferscheibe 8 weist einen zweiten Scheibengrundkörper 9 und eine Mehrzahl zweiter Permanentmagnete 10 mit einer Kreisringsegmentförmigen Grundfläche auf. Ein erster magnetischer Pol 7 der zweiten Permanentmagnete 10 ist dem zweiten Scheibengrundkörper 9 zugewandt bzw. steht mit diesem in Kontakt. Ein zweiter magnetischer Pol 20 der zweiten Permanentmagnete 10 ist dem zweiten Scheibengrundkörper 9 abgewandt. Zwischen den zweiten Permanentmagneten 10 sind zweite Freiräume 11 ausgebildet, welche den zweiten Permanentmagneten 10 in Form und Größe entsprechen. Die zweite Läuferscheibe 4 ist koaxial zur Rotationsachse R ausgebildet. Die ersten Permanentmagnete 5 sind zu den zweiten Freiräumen 11 und die zweiten Permanentmagnete 10 zu den ersten Freiräumen 6 ausgerichtet. Zwischen der ersten Läuferscheibe 3 und der zweiten Läuferscheibe 8 ist eine Lageraufnahme 13 angeordnet. Durch Zusammenführen der ersten Läuferscheibe 3 und der zweiten Läuferscheibe 8 ist eine erste Seite des Anschlagrings 23 der Lageraufnahme 13 mit dem Napfboden 24 des Lagernapfes 15 und eine zweite Seite des Anschlagrings 23 mit dem zweiten Scheibengrundkörper 9 in Kontakt bringbar. Im zusammengeführten Zustand der ersten Läuferscheibe 3 und der zweiten Läuferscheibe 8 sind die ersten Permanentmagnete 5 in den zweiten Freiräumen 11 und die zweiten Permanentmagnete 10 in den ersten Freiräumen 6 angeordnet. Vorzugsweise kontaktieren die ersten Permanentmagnete 5 im zusammengeführten Zustand den zweiten Scheibengrundkörper 9 und die zweiten Permanentmagnete 10 den ersten Scheibengrundkörper 4. Der auf diese Weise hergestellte Läufer 1 weist somit einen die ersten Permanentmagnete 5 sowie die zweiten Permanentmagnete 10 aufweisenden Gesamtpermanentmagneten mit regelmäßig abwechselnder Polung auf.

Fig. 5 zeigt eine bevorzugte erste Ausführungsform eines erfindungsgemäßen Läufers 1 schematisch in einer perspektivischen sowie explodierten Ansicht. Der Läufer 1 ist gemäß einer Klauenkupplung aufgebaut, wobei die ersten Permanentmagnete 5 an dem ersten Scheibengrundkörper 4 der ersten Läuferscheibe 3 und die zweiten Permanentmagnete 10 an dem zweiten Scheibengrundkörper 9 der zweiten Läuferscheibe 8 angeordnet sind. Nach dem Zusammenfügen der ersten Läuferscheibe 3 mit der zweiten Läuferscheibe 8 sind die ersten Permanentmagnete 5 jeweils zwischen zwei zweiten Permanentmagneten 10 im Wesentlichen spaltfrei angeordnet.

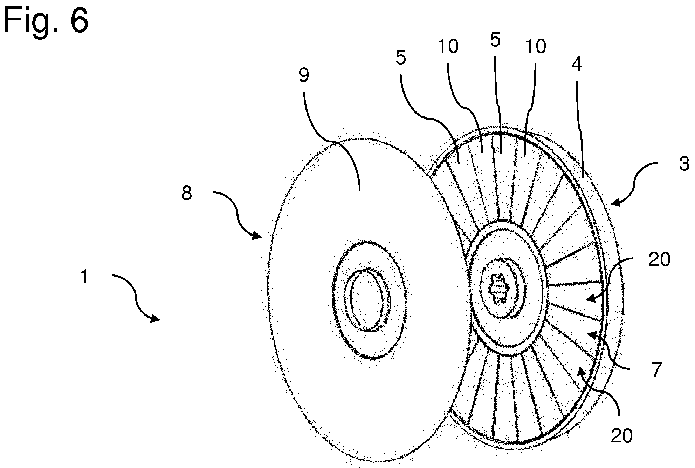

Fig. 6 zeigt eine bevorzugte zweite Ausführungsform eines erfindungsgemäßen Läufers 1 schematisch in einer perspektivischen sowie explodierten Ansicht. Die ersten Permanentmagnete 5 sind bereits vor dem zusammenführen jeweils zwischen zwei zweiten Permanentmagneten 10 im Wesentlichen spaltfrei an dem ersten Scheibengrundkörper 4 der ersten Läuferscheibe 3 angeordnet. Die ersten Permanentmagnete 5 und die zweiten Permanentmagnete 10 sind derart an dem ersten Scheibengrundkörper gehalten, dass abwechseln der erste Magnetpol 7 und der zweite Magnetpol 20 zum ersten Scheibengrundkörper 4 weist. Der erste Scheibengrundkörper 4 ist napfartig ausgebildet. Der zweite Scheibengrundkörper 9 der zweiten Läuferscheibe 8 ist als Deckel ausgebildet.

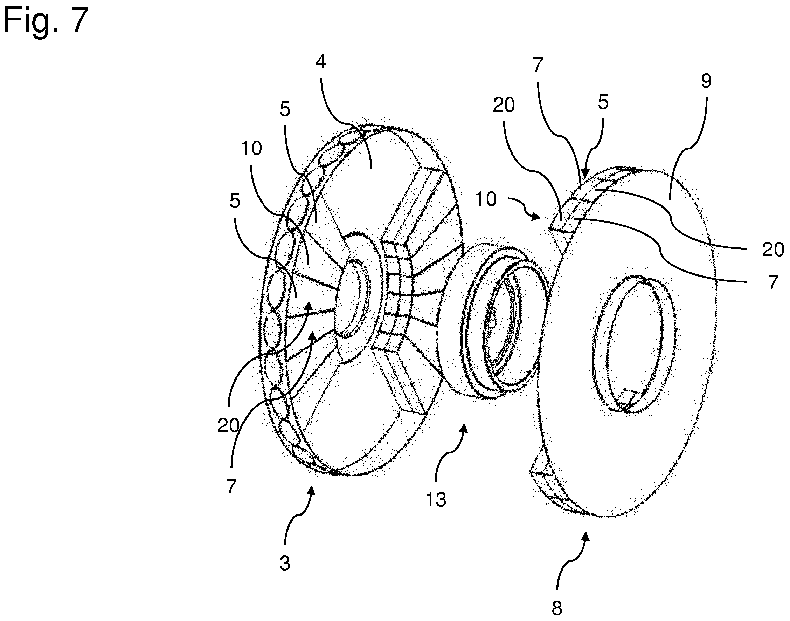

Fig. 7 zeigt eine bevorzugte dritte Ausführungsform eines erfindungsgemäßen Läufers 1 schematisch in einer perspektivischen sowie explodierten Ansicht. Die ersten Permanentmagnete 5 und die zweiten Permanentmagnete 10 sind vor dem zusammenführen jeweils segmentweise an dem Scheibengrundkörper 4 der ersten Läuferscheibe 3 der ersten Läuferscheibe 3 sowie dem zweiten Scheibengrundkörper 9 der zweiten Läuferscheibe 8 angeordnet. Beim Zusammenführen der ersten Läuferscheibe 3 und der zweiten Läuferscheibe 8 greifen die Segmente klauenartig sowie vorzugsweise spaltfrei ineinander. Die ersten Permanentmagnete 5 und die zweiten Permanentmagnete 10 sind derart an dem ersten Scheibengrundkörper 4 bzw. dem zweiten scheibengrundkörper 9 gehalten, dass abwechseln der erste Magnetpol 7 und der zweite Magnetpol 20 zum ersten Scheibengrundkörper 4 weist.

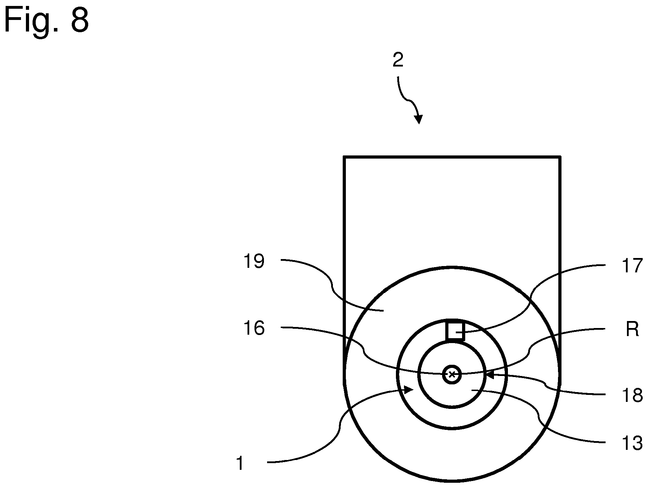

In Fig. 8 ist eine bevorzugte Ausführungsform eines erfindungsgemäßen Elektroflachmotors 2 schematisch in einer Draufsicht abgebildet. Der Elektroflachmotor 2 weist eine Statorvorrichtung 19 zum Erzeugen eines magnetischen Wechselfelds auf, welche zudem als Gehäuse des Elektroflachmotors 2 ausgebildet ist und diesen vor äußeren Einflüssen, wie z.B. Schmutz, Feuchtigkeit oder dergleichen, schützt. An der Statorvorrichtung 19 ist ein erfindungsgemäßer Läufer 1 über die Lageraufnahme 13 und ein nicht dargestelltes Lager um die Rotationsachse R rotierbar gelagert. Die Statorvorrichtung 19 umgibt den Läufer 1 im Wesentlichen, wobei die Welle 16 des Läufers 1 aus der Statorvorrichtung 19 herausragt. An dem Läufer 1 ist eine Markierung 18 ausgebildet, welche mittels eines optischen Sensors 17 der Statorvorrichtung 19 zur Bestimmung der Drehzahl und/oder der Drehwinkelstellung des Läufers 1 detektierbar ist.

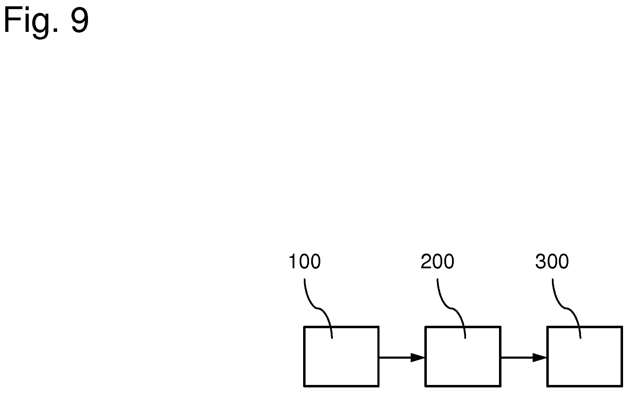

In Fig. 9 ist eine bevorzugte Ausführungsform eines erfindungsgemäßen Verfahrens schematisch in einem Ablaufdiagramm abgebildet. In einem ersten Verfahrensschritt 100 wird eine erste Läuferscheibe 3 mit einem ersten Scheibengrundkörper 4 und an dem ersten Scheibengrundkörper 4 angeordneten ersten Permanentmagneten 5 bereitgestellt. Die ersten Permanentmagnete 5 sind derart voneinander beabstandet dem an ersten Scheibengrundkörper 4 angeordnet, dass jeweils zwischen zwei ersten Permanentmagneten 5 ein erster Freiraum 6 ausgebildet ist. Ein erster magnetischer Pol 7 der ersten Permanentmagnete 5 ist dem ersten Scheibengrundkörper 4 zugewandt. In einem zweiten Verfahrensschritt 200 wird eine zweite Läuferscheibe 8 mit einem zweiten Scheibengrundkörper 9 und an dem zweiten Scheibengrundkörper 9 angeordneten zweiten Permanentmagneten 10 bereitgestellt. Die zweiten Permanentmagnete 10 sind derart voneinander beabstandet an dem zweiten Scheibengrundkörper 9 angeordnet, dass jeweils zwischen zwei zweiten Permanentmagneten 10 ein zweiter Freiraum 11 ausgebildet ist. Ein erster magnetischer Pol 7 der zweiten Permanentmagnete 10 ist dem zweiten Scheibengrundkörper 9 zugewandt. In einem dritten Verfahrensschritt 300 wird die erste Läuferscheibe 3 mit der zweiten Läuferscheibe 8 derart zusammengeführt und vorzugsweise miteinander verpresst, dass die ersten Permanentmagnete 5 in den zweiten Freiräumen 11 und die zweiten Permanentmagnete 10 in den ersten Freiräumen 6 angeordnet sind.

### Bezugszeichenliste

- 1: Läufer
- 2: Elektroflachmotor
- 3: erste Läuferscheibe
- 4: erster Scheibengrundkörper
- 5: erster Permanentmagnet
- 6: erster Freiraum
- 7: erster magnetischer Pol
- 8: zweite Läuferscheibe
- 9: zweiter Scheibengrundkörper
- 10: zweiter Permanentmagnet
- 11: zweiter Freiraum
- 12: erste Seitenfläche
- 13: Lageraufnahme
- 14: Lagerhals
- 15: Lagernapf
- 16: Welle
- 17: Sensor
- 18: Markierung
- 19: Statorvorrichtung
- 20: zweiter magnetischer Pol
- 21: Aufnahmebereich
- 22: Aufnahmewandung
- 23: Anschlagring
- 24: Napfboden

- 100: erster Verfahrensschritt
- 200: zweiter Verfahrensschritt
- 300: dritter Verfahrensschritt

- R: Rotationsachse

## Patentansprüche

1. Verfahren zur Herstellung eines Läufers (1) für einen Elektroflachmotor (2), aufweisend die folgenden Verfahrensschritte:
- Bereitstellen einer ersten Läuferscheibe (3) mit einem ersten Scheibengrundkörper (4) und an dem ersten Scheibengrundkörper (4) angeordneten, voneinander beabstandeten ersten Permanentmagneten (5),
- Bereitstellen einer zweiten Läuferscheibe (8) mit einem zweiten Scheibengrundkörper (9),
- Bereitstellen von zweiten Permanentmagneten (10), und
- Zusammenführen der ersten Läuferscheibe (3) mit der zweiten Läuferscheibe (8) derart, dass die ersten Permanentmagnete (5) und die zweiten Permanentmagnete (10) abwechselnd nebeneinander zwischen dem ersten Scheibengrundkörper (4) und dem zweiten Scheibengrundkörper (9) angeordnet sind, wobei erste magnetischen Pole (7) der ersten Permanentmagnete (5) dem ersten Scheibengrundkörper (4) und erste magnetischen Pole (7) der zweiten Permanentmagnete (10) der zweiten Läuferscheibe (8) zugewandt sind,
**dadurch gekennzeichnet, dass** die ersten Permanentmagnete (5) und die zweiten Permanentmagnete (10) derart angeordnet werden, dass benachbarte erste Permanentmagnete (5) und zweite Permanentmagnete (10) einander kontaktieren.

2. Verfahren nach Anspruch 1,
**dadurch gekennzeichnet,**
**dass** beim Bereitstellen der ersten Läuferscheibe (3) die ersten Permanentmagnete (5) derart voneinander beabstandet an dem ersten Scheibengrundkörper (4) angeordnet sind, dass jeweils zwischen zwei ersten Permanentmagneten (5) ein erster Freiraum (6) ausgebildet ist, wobei der erste magnetische Pol (7) der ersten Permanentmagnete (5) dem ersten Scheibengrundkörper (4) zugewandt ist, wobei beim Bereitstellen der zweiten Läuferscheibe (8) die zweiten Permanentmagnete (10) derart voneinander beabstandet an dem zweiten Scheibengrundkörper (9) angeordnet sind, dass jeweils zwischen zwei zweiten Permanentmagneten (10) ein zweiter Freiraum (11) ausgebildet ist, wobei der erste magnetische Pol (7) der zweiten Permanentmagnete (10) dem zweiten Scheibengrundkörper (9) zugewandt ist, und wobei das Zusammenführen derart erfolgt, dass die ersten Permanentmagnete (5) von den zweiten Freiräumen (11) und die zweiten Permanentmagnete (10) von den ersten Freiräumen (6) aufgenommen sind.

3. Verfahren nach Anspruch 1,
**dadurch gekennzeichnet,**
**dass** beim Bereitstellen der ersten Läuferscheibe (3) die zweiten Permanentmagnete (10) und die ersten Permanentmagnete (5) abwechselnd nebeneinander an dem ersten Scheibengrundkörper (4) angeordnet sind.

4. Verfahren nach Anspruch 3,
**dadurch gekennzeichnet,**
**dass** beim Bereitstellen der zweiten Läuferscheibe (8) die zweiten Permanentmagnete (10) und die ersten Permanentmagnete (5) abwechselnd nebeneinander an dem zweiten Scheibengrundkörper (9) angeordnet sind, wobei das Zusammenführen derart erfolgt, dass erste magnetische Pole (7) der ersten Permanentmagnete (5) mit zweiten magnetischen Polen (20) der zweiten Permanentmagnete (10) zusammengeführt werden.

5. Verfahren nach einem der vorangegangenen Ansprüche,
**dadurch gekennzeichnet,**
**dass** die erste Läuferscheibe (3) und die zweite Läuferscheibe (8) miteinander verpresst werden
und/oder,
**dass** die erste Läuferscheibe (3) und die zweite Läuferscheibe (8) miteinander verklebt werden.

6. Verfahren nach einem der vorangegangenen Ansprüche,
**dadurch gekennzeichnet,**
**dass** die ersten Permanentmagnete (5) auf die erste Läuferscheibe (3) und/oder die zweiten Permanentmagnete (10) auf die zweite Läuferscheibe (8) geklebt werden.

7. Läufer (1) für einen Elektroflachmotor (2), aufweisend eine erste Läuferscheibe (3) mit einem ersten Scheibengrundkörper (4) und eine zweite Läuferscheibe (8) mit einem zweiten Scheibengrundkörper (9),
wobei zwischen dem ersten Scheibengrundkörper (4) und dem zweiten Scheibengrundkörper (9) erste Permanentmagnete (5) und zweite Permanentmagnete (10) angeordnet sind, wobei die ersten Permanentmagnete (5) und die zweiten Permanentmagnete (10) abwechselnd nebeneinander zwischen dem ersten Scheibengrundkörper (4) und dem zweiten Scheibengrundkörper (9) angeordnet sind, wobei erste magnetischen Pole (7) der ersten Permanentmagnete (5) dem ersten Scheibengrundkörper (4) und erste magnetischen Pole (7) der zweiten Permanentmagnete (10) der zweiten Läuferscheibe (8) zugewandt sind,
**dadurch gekennzeichnet,**
**dass** die ersten Permanentmagnete (5) und die zweiten Permanentmagnete (10) derart angeordnet sind, dass benachbarte erste Permanentmagnete (5) und zweite Permanentmagnete (10) einander kontaktieren.

8. Läufer (1) nach Anspruch 7,
**dadurch gekennzeichnet,**
**dass** der Läufer (1) mittels eines Verfahrens nach einem der Ansprüche 1 bis 7 hergestellt ist.

9. Läufer (1) nach Anspruch 7 oder 8,
**dadurch gekennzeichnet,**
**dass** der erste Scheibengrundkörper (4) und/oder der zweite Scheibengrundkörper (9) als Metallscheibe ausgebildet sind und/oder,
**dass** die ersten Permanentmagnete (5) dieselbe Form und Größe wie die zweiten Permanentmagnete (10) aufweisen.

10. Läufer (1) nach wenigstens einem der Ansprüche 7 bis 9,
**dadurch gekennzeichnet,**
**dass** die ersten Permanentmagnete (5) erste Seitenflächen (12) aufweisen, wobei die ersten Seitenflächen (12) senkrecht oder im Wesentlichen senkrecht zum ersten Scheibengrundkörper (4) angeordnet sind,
und/oder,
**dass** die ersten Permanentmagnete (5) eine kreisringsegmentförmige Grundfläche aufweisen.

11. Läufer (1) nach wenigstens einem der Ansprüche 7 bis 10,
**dadurch gekennzeichnet,**
**dass** der Läufer (1) eine Lageraufnahme (13) zur Aufnahme eines Lagers oder zum Bereitstellen einer Laufbahn für einen Wälzkörper aufweist, wobei die Lageraufnahme (13) in einem sich um eine Rotationsachse (R) des ersten Scheibengrundkörpers (4) erstreckenden, hohlzylinderförmig ausgebildeten Lagerhals (14) des ersten Scheibengrundkörpers (4) angeordnet ist, oder,
**dass** der Läufer (1) eine Lageraufnahme (13) zur Aufnahme eines Lagers oder zum Bereitstellen einer Laufbahn für einen Wälzkörper aufweist, wobei die Lageraufnahme (13) in einem sich um eine Rotationsachse (R) des ersten Scheibengrundkörpers (4) erstreckenden, auf einer der zweiten Läuferscheibe (8) abgewandten Seite geschlossenen Lagernapf (15) des ersten Scheibengrundkörpers (4) angeordnet ist.

12. Läufer (1) nach Anspruch 11,
**dadurch gekennzeichnet,**
**dass** die Lageraufnahme (13) als Sinterteil ausgebildet ist.

13. Läufer (1) nach einem der Ansprüche 11 oder 12,
**dadurch gekennzeichnet,**
**dass** die Lageraufnahme (13) in einem zentralen Bereich eine mit der Lageraufnahme (13) drehfest verbundene Welle (16) oder eine Aufnahme zur drehfesten Aufnahme einer Welle (16) aufweist.

14. Läufer (1) nach wenigstens einem der Ansprüche 7 bis 13,
**dadurch gekennzeichnet,**
**dass** die erste Läuferscheibe (3) eine von einem Sensor (17) detektierbare Markierung (18) zur Bestimmung einer Drehzahl und/oder eines Drehwinkels des Läufers (1) aufweist.

15. Elektroflachmotor (2) für eine Schnellverstellvorrichtung eines Kraftfahrzeugs, aufweisend eine Statorvorrichtung (19) und einen Läufer (1),
**dadurch gekennzeichnet,**
**dass** der Läufer (1) als Läufer (1) nach einem der Ansprüche 7 bis 14 ausgebildet ist.

## Claims

1. Method for producing a rotor (1) for a flat electric motor (2), comprising the following method steps:
- providing a first rotor disc (3) having a first disc main body (4) and first permanent magnets (5) arranged on the first disc main body (4) and spaced apart from one another,
- providing a second rotor disc (8) having a second disc main body (9),
- providing second permanent magnets (10), and
- bringing the first rotor disc (3) and the second rotor disc (8) together such that the first permanent magnets (5) and the second permanent magnets (10) are arranged alternately next to one another between the first disc main body (4) and the second disc main body (9), wherein first magnetic poles (7) of the first permanent magnets (5) are facing the first disc main body (4) and first magnetic poles (7) of the second permanent magnets (10) are facing the second rotor disc (8),
**characterised in that** the first permanent magnets (5) and the second permanent magnets (10) are arranged such that adjacent first permanent magnets (5) and second permanent magnets (10) are contacting one another.

2. Method according to claim 1,
**characterised in that,**
during provision of the first rotor disc (3), the first permanent magnets (5) are arranged on the first disc main body (4) so as to be spaced apart from one another in such a way that a first free space (6) is formed in each case between two first permanent magnets (5), wherein the first magnetic pole (7) of the first permanent magnets (5) is facing the first disc main body (4), wherein, during provision of the second rotor disc (8), the second permanent magnets (10) are arranged on the second disc main body (9) so as to be spaced apart from one another in such a way that a second free space (11) is formed in each case between two second permanent magnets (10), wherein the first magnetic pole (7) of the second permanent magnets (10) is facing the second disc main body (9), and wherein the bringing-together takes place in such a way that the first permanent magnets (5) are received by the second free spaces (11) and the second permanent magnets (10) are received by the first free spaces (6).

3. Method according to claim 1,
**characterised in that,**
during provision of the first rotor disc (3), the second permanent magnets (10) and the first permanent magnets (5) are arranged alternately next to one another on the first disc main body (4).

4. Method according to claim 3,
**characterised in that,**
during provision of the second rotor disc (8), the second permanent magnets (10) and the first permanent magnets (5) are arranged alternately next to one another on the second disc main body (9), wherein the bringing-together takes place in such a way that first magnetic poles (7) of the first permanent magnets (5) and second magnetic poles (20) of the second permanent magnets (10) are brought together.

5. Method according to any of the preceding claims, **characterised in that**
the first rotor disc (3) and the second rotor disc (8) are pressed together
and/or
the first rotor disc (3) and the second rotor disc (8) are glued together.

6. Method according to any of the preceding claims, **characterised in that**
the first permanent magnets (5) are glued onto the first rotor disc (3) and/or the second permanent magnets (10) are glued onto the second rotor disc (8).

7. Rotor (1) for a flat electric motor (2), comprising a first rotor disc (3) having a first disc main body (4) and a second rotor disc (8) having a second disc main body (9),
wherein first permanent magnets (5) and second permanent magnets (10) are arranged between the first disc main body (4) and the second disc main body (9), wherein the first permanent magnets (5) and the second permanent magnets (10) are arranged alternately next to one another between the first disc main body (4) and the second disc main body (9), wherein first magnetic poles (7) of the first permanent magnets (5) are facing the first disc main body (4) and first magnetic poles (7) of the second permanent magnets (10) are facing the second rotor disc (8),
**characterised in that**
the first permanent magnets (5) and the second permanent magnets (10) are arranged such that adjacent first permanent magnets (5) and second permanent magnets (10) are contacting one another.

8. Rotor (1) according to claim 7,
**characterised in that**
the rotor (1) is produced by means of a method according to any of claims 1 to 7.

9. Rotor (1) according to claim 7 or 8,
**characterised in that**
the first disc main body (4) and/or the second disc main body (9) are designed as a metal disc
and/or
the first permanent magnets (5) have the same shape and size as the second permanent magnets (10).

10. Rotor (1) according to at least one of claims 7 to 9,
**characterised in that**
the first permanent magnets (5) comprise first side surfaces (12), wherein the first side surfaces (12) are arranged perpendicularly or substantially perpendicularly to the first disc main body (4)
and/or
the first permanent magnets (5) have a footprint in the shape of a circular ring segment.

11. Rotor (1) according to at least one of claims 7 to 10,
**characterised in that**
the rotor (1) comprises a bearing seat (13) for receiving a bearing or for providing a raceway for a rolling element, wherein the bearing seat (13) is arranged in a hollow-cylindrical bearing neck (14) of the first disc main body (4) that extends around an axis of rotation (R) of the first disc main body (4),
or
the rotor (1) comprises a bearing seat (13) for receiving a bearing or for providing a raceway for a rolling element, wherein the bearing seat (13) is arranged in a bearing shell (15) of the first disc main body (4) that extends around an axis of rotation (R) of the first disc main body (4) and that is closed on a side facing away from the second rotor disc (8).

12. Rotor (1) according to claim 11,
**characterised in that**
the bearing seat (13) is designed as a sintered part.

13. Rotor (1) according to any of claims 11 or 12,
**characterised in that**
the bearing seat (13), in a central region, comprises a shaft (16) that is connected to the bearing seat (13) for conjoint rotation therewith or comprises a mounting for receiving a shaft (16) for conjoint rotation therewith.

14. Rotor (1) according to at least one of claims 7 to 13,
**characterised in that**
the first rotor disc (3) comprises a marking (18) that can be detected by a sensor (17) for determining a rotational speed and/or rotational angle of the rotor (1).

15. Flat electric motor (2) for a quick-adjustment device of a motor vehicle, comprising a stator device (19) and a rotor (1),
**characterised in that**
the rotor (1) is designed as a rotor (1) according to any of claims 7 to 14.

## Revendications

1. Procédé pour la fabrication d'un rotor (1) pour un moteur plat électrique (2), comprenant les étapes de procédé suivantes :
- mise en place d'un premier disque de rotor (3) comportant un premier corps de base discoïdal (4) et des premiers aimants permanents (5) disposés sur le premier corps de base discoïdal (4) et espacés les uns des autres,
- mise en place d'un second disque de rotor (8) avec un second corps de base discoïdal (9),
- mise en place de seconds aimants permanents (10), et
- assemblage du premier disque de rotor (3) avec le second disque de rotor (8) de telle sorte que les premiers aimants permanents (5) et les seconds aimants permanents (10) sont disposés en alternance les uns à côté des autres entre le premier corps de base discoïdal (4) et le second corps de base discoïdal (9), les premiers pôles magnétiques (7) des premiers aimants permanents (5) étant tournés vers le premier corps de base discoïdal (4) et les premiers pôles magnétiques (7) des seconds aimants permanents (10) étant tournés vers le second disque de rotor (8),
**caractérisé en ce que** les premiers aimants permanents (5) et les seconds aimants permanents (10) sont disposés de telle sorte que les premiers aimants permanents et les seconds aimants permanents (10) adjacents (10) soient en contact les uns avec les autres.

2. Procédé selon la revendication 1,
**caractérisé en ce que**
lors de la mise en place du premier disque de rotor (3), les premiers aimants permanents (5) sont disposés sur le premier corps de base discoïdal (4) à une distance les uns des autres telle qu'un premier espace libre (6) est formé entre deux premiers aimants permanents (5), le premier pôle magnétique (7) des premiers aimants permanents (5) étant tourné vers le premier corps de base discoïdal (4), les seconds aimants permanents (10) étant, lors de la mise en place du second disque de rotor (8), disposés sur le second corps de base discoïdal (9) à une distance les uns des autres telle qu'un second espace libre (11) est formé entre deux seconds aimants permanents (10), le premier pôle magnétique (7) des seconds aimants permanents (10) étant tourné vers le second corps de base discoïdal (9), et l'assemblage s'effectuant de telle sorte que les premiers aimants permanents (5) sont logés dans les seconds espaces libres (11) et les seconds aimants permanents (10) dans les premiers espaces libres (6).

3. Procédé selon la revendication 1,
**caractérisé en ce que**
lors de la mise en place du premier disque de rotor (3), les seconds aimants permanents (10) et les premiers aimants permanents (5) sont disposés en alternance les uns à côté des autres sur le premier corps de base discoïdal (4).

4. Procédé selon la revendication 3,
**caractérisé en ce que**
lors de la mise en place du second disque de rotor (8), les seconds aimants permanents (10) et les premiers aimants permanents (5) sont disposés en alternance les uns à côté des autres sur le second corps de base discoïdal (9), l'assemblage s'effectuant de telle sorte que les premiers pôles magnétiques (7) des premiers aimants permanents (5) soient alignés avec les seconds pôles magnétiques (20) des seconds aimants permanents (10).

5. Procédé selon l'une des revendications précédentes,
**caractérisé en ce que**
le premier disque de rotor (3) et le second disque de rotor (8) sont assemblés par pressage
et/ou,
**en ce que** le premier disque de rotor (3) et le second disque de rotor (8) sont assemblés par collage.

6. Procédé selon l'une des revendications précédentes,
**caractérisé en ce que**
les premiers aimants permanents (5) sont collés sur le premier disque de rotor (3) et/ou les seconds aimants permanents (10) sont collés sur le second disque de rotor (8).

7. Rotor (1) pour un moteur plat électrique (2) comprenant un premier disque de rotor (3) avec un premier corps de base discoïdal (4) et un second disque de rotor (8) avec un second corps de base discoïdal (9),
des premiers aimants permanents (5) et des seconds aimants permanents (10) étant disposés entre le premier corps de base discoïdal (4) et le second corps de base discoïdal (9), les premiers aimants permanents (5) et les seconds aimants permanents (10) étant disposés en alternance les uns à côté des autres entre le premier corps de base discoïdal (4) et le second corps de base discoïdal (9), les premiers pôles magnétiques (7) des premiers aimants permanents (5) étant tournés vers le premier corps de base discoïdal (4) et les premiers pôles magnétiques (7) des seconds aimants permanents (10) étant tournés vers le second disque de rotor (8),
**caractérisé en ce que**
les premiers aimants permanents (5) et les seconds aimants permanents (10) sont disposés de telle sorte que les premiers aimants permanents (5) et les seconds aimants permanents (10) adjacents sont en contact les uns avec les autres.

8. Rotor (1) selon la revendication 7,
**caractérisé en ce que**
le rotor (1) est fabriqué au moyen d'un procédé selon l'une quelconque des revendications 1 à 7.

9. Rotor (1) selon la revendication 7 ou 8,
**caractérisé en ce que**
le premier corps de base discoïdal (4) et/ou le second corps de base discoïdal (9) sont conçus sous forme de disques métalliques
et/ou,
les premiers aimants permanents (5) ont la même forme et la même taille que les seconds aimants permanents (10).

10. Rotor (1) selon au moins l'une des revendications 7 à 9,
**caractérisé en ce que**
les premiers aimants permanents (5) présentent des premières faces latérales (12), lesdites premières faces latérales (12) étant disposées perpendiculairement ou sensiblement perpendiculairement au premier corps de base discoïdal (4),
et/ou,
les premiers aimants permanents (5) présentent une surface de base en forme de segment d'anneau circulaire.

11. Rotor (1) selon au moins l'une des revendications 7 à 10,
**caractérisé en ce que**
le rotor (1) comporte un logement de palier (13) destiné à recevoir un palier ou à fournir une piste de roulement pour un élément roulant, le logement de palier (13) étant disposé dans un tourillon (14) en forme de cylindre creux du premier corps de base discoïdal, s'étendant autour d'un axe de rotation (R) du premier corps de base discoïdal (4),
ou,
le rotor (1) comporte un logement de palier (13) destiné à recevoir un palier ou à fournir une piste de roulement pour un élément roulant, le logement de palier (13) étant disposé dans un cuvette de palier (15) du premier corps de base discoïdal (4), et s'étendant autour d'un axe de rotation (R) du premier corps de base discoïdal (4), fermé sur un côté opposé au second disque de rotor (8).

12. Rotor (1) selon la revendication 11,
**caractérisé en ce que**
le logement de palier (13) est réalisé sous forme de pièce frittée.

13. Rotor (1) selon l'une des revendications 11 ou 12,
**caractérisé en ce que**
le logement de palier (13) comporte, dans une zone centrale, un arbre (16) solidaire en rotation du logement de palier (13) ou un logement destiné à recevoir un arbre (16) de manière solidaire en rotation.

14. Rotor (1) selon au moins l'une des revendications 7 à 13,
**caractérisé en ce que**
le premier disque de rotor (3) comporte un repère (18) détectable par un capteur (17) permettant de déterminer une vitesse de rotation et/ou un angle de rotation du rotor (1).

15. Moteur plat électrique (2) destiné à un dispositif de réglage rapide d'un véhicule automobile, comprenant un ensemble stator (19) et un rotor (1),
**caractérisé en ce que**
le rotor (1) est conçu comme un rotor (1) selon l'une des revendications 7 à 14.
